(19) **Europäisches Patentamt / European Patent Office / Office européen des brevets**

(11) **EP 3 660 687 A1**

(12) **EUROPEAN PATENT APPLICATION**
published in accordance with Art. 153(4) EPC

(43) Date of publication:
**03.06.2020 Bulletin 2020/23**

(21) Application number: **17919422.0**

(22) Date of filing: **24.07.2017**

(51) Int Cl.:
***G06F 13/00*** (2006.01)

(86) International application number:
**PCT/JP2017/026712**

(87) International publication number:
**WO 2019/021347 (31.01.2019 Gazette 2019/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fujitsu Limited**
**Kawasaki-shi, Kanagawa 211-8588 (JP)**

(72) Inventors:
• **TANAKA, Hideki**
  **Kawasaki-shi**
  **Kanagawa 211-8588 (JP)**

• **CHEN, Bin**
  **Kawasaki-shi**
  **Kanagawa 211-8588 (JP)**
• **OKABAYASHI, Keiju**
  **Kawasaki-shi**
  **Kanagawa 211-8588 (JP)**
• **MURAKAWA, Yoshihiko**
  **Kawasaki-shi**
  **Kanagawa 211-8588 (JP)**

(74) Representative: **Haseltine Lake Kempner LLP**
**Lincoln House, 5th Floor**
**300 High Holborn**
**London WC1V 7JH (GB)**

(54) **INFORMATION PROCESSING DEVICE, SHARING CONTROL METHOD, AND SHARING CONTROL PROGRAM**

(57) An information processing apparatus according to an embodiment includes a display control unit, a setting unit, and an operation control unit. The display control unit that controls display of an object by a second display device on a first display screen that is displayed by a first display device and a second display screen that shares the object to be displayed. The setting unit sets a first operation region allocated to the first display screen and a second operation region allocated to the second display screen in the second display screen. The operation control unit prohibits, on the second display screen, an input of an operation to an object included in the first operation region. Furthermore, the operation control unit permits, on the second display screen, an input of an operation to an object included in the second operation region.

FIG. 4

**Description**

FIELD

The present invention relates to an information processing apparatus, a share control method, and a share control program.

BACKGROUND

In recent years, with widespread use of projectors and large displays, all kinds of places in a space can be used as a display. For example, a display screen of a terminal such as a smartphone, a tablet terminal, or the like that is brought by a user is displayed on a display at that place, and the screen is shared by a plurality of people.

Moreover, an object displayed on a large display screen is shared by a plurality of users, and a conference is held and ideas are created while freely moving and operating the object. Note that the object may be, for example, information displayed on the display screen and includes information such as text, images, icons, sticky notes, notebooks, or the like. The object may receive operations by the user such as movement, change in directions and sizes, deletion, and editing. Furthermore, such display screen sharing is performed between bases by connecting communication between the plurality of bases, and the screen is shared not only in a single base but also from a remote place so as to obtain common information.

CITATION LIST

PATENT DOCUMENT

Patent Document 1: Japanese Laid-open Patent Publication No. 05-046559
Patent Document 2: Japanese Laid-open Patent Publication No. 2004-113386
Patent Document 3: Japanese Laid-open Patent Publication No. 2006-202138
Patent Document 4: Japanese Laid-open Patent Publication No. 2014-203281

SUMMARY

[TECHNICAL PROBLEM]

However, for example, in a case where a display screen is shared by a plurality of bases, there is a case where an object used by a user in a certain base is operated by a user in another base. In one aspect, an object of the present invention is to prevent a work of a user who operates an object from interfering in a case where a display screen is shared by a plurality of bases.

[SOLUTION TO PROBLEM]

An information processing apparatus according to one aspect of the present invention includes a display control unit, a setting unit, and an operation control unit. The display control unit controls display of an object, by a second display device, on a second display screen that shares the object with a first display screen displayed by a first display device. The setting unit sets a first operation region allocated to the first display screen and a second operation region allocated to the second display screen, in the second display screen. The operation control unit prohibits, on the second display screen, an input of an operation to an object included in the first operation region. Furthermore, the operation control unit permits, on the second display screen, an input of an operation to an object included in the second operation region.

[ADVANTAGEOUS EFFECTS OF INVENTION]

In a case where a display screen is shared by a plurality of bases, interference by a work of a user who operates an object can be prevented.

BRIEF DESCRIPTION OF DRAWINGS

FIG. 1 is a diagram illustrating an exemplary information display system.
FIG. 2 is a diagram illustrating interference by a user's operation between bases.
FIG. 3 is a diagram illustrating a block configuration of a server according to an embodiment.
FIG. 4 is a diagram illustrating settings of a user region according to the embodiment.
FIG. 5 is a diagram for explaining a hierarchy of user regions in a base 1.
FIG. 6 is a diagram for explaining a hierarchy of user regions in a base 2.
FIG. 7 is a diagram illustrating display of the user region for each base according to the hierarchy.
FIG. 8 is a diagram illustrating a gradient set for the user region.
FIG. 9 is a diagram illustrating movement of an object according to the gradient.
FIG. 10 is a diagram illustrating application of the gradient according to movement of the user region.
FIG. 11 is a diagram illustrating a user region on a display screen.
FIG. 12 is a diagram illustrating user region information according to the embodiment.
FIG. 13 is a diagram illustrating object information according to the embodiment.
FIG. 14 is a diagram illustrating display on the display screen using the user region information and the object information.
FIG. 15 is a diagram illustrating an operation flow of user region allocation processing according to the embodiment.
FIG. 16 is a diagram illustrating an operation flow of hierarchy allocation processing according to the embodiment.
FIG. 17 is a diagram illustrating an operation flow of object specification processing according to the embodiment.
FIG. 18 is a diagram illustrating an operation flow of object operation permission processing according to the embodiment.
FIG. 19 is a diagram illustrating an operation flow of gradient map generation processing according to the embodiment.
FIG. 20 is a diagram illustrating an operation flow of object sharing processing according to the embodiment.
FIG. 21 is a diagram illustrating share cancellation processing according to the embodiment.
FIG. 22 is a diagram illustrating a hardware configuration of a computer for realizing a server according to the embodiment.
FIG. 23 is a diagram illustrating a hardware configuration of a computer for realizing a display unit according to the embodiment.

DESCRIPTION OF EMBODIMENTS

Hereinafter, some embodiments of the present invention will be described in detail with reference to the drawings. Note that corresponding elements in a plurality of drawings are denoted with the same reference numeral.

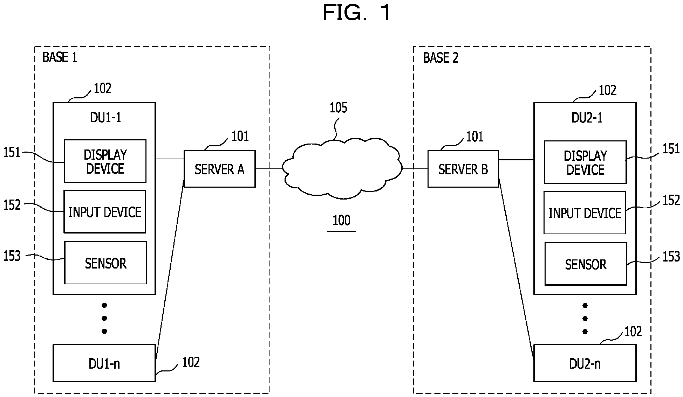

FIG. 1 is a diagram illustrating an exemplary information display system 100. The information display system 100 may be, for example, a system that controls screen sharing between display devices. The information display system 100 includes, for example, a server 101 and a display unit (DU) 102.

The server 101 may be, for example, a computer (information processing apparatus) such as a personal computer (PC) and a notebook PC. The server 101 may be installed, for example, for each base. Note that, for example, the base is a place where the server 101 and one or more display units 102 are installed, and the base may include a conference room, other places where ideas are created and where discussion is made, and the like. For example, the server 101 is connected to one or the plurality of display units 102 in the base and may control display of information by the connected display unit 102. For example, in FIG. 1, a server A is included in a base 1 as the server 101, and the server A is connected to the plurality of display units 102 from DU1-1 to DU1-n. The server A may control display of information from the DU1-1 to the DU1-n that are connected to the server A. Furthermore, a server B is included in a base 2 as the server 101, and the server 101 is connected to the plurality of display units 102 from DU2-1 to DU2-n. The server B may control display of information from the DU2-1 to the DU2-n that are connected to the server B. Furthermore, the server 101 may be connected to, for example, the server 101 in the other base via a network 105.

The display unit 102 is, for example, a computer such as a personal computer (PC) or a notebook PC. The display unit 102 includes, for example, a display device 151, an input device 152, and a sensor 153. Note that, in FIG. 1, the display device 151, the input device 152, and the sensor 153 are illustrated in each of some display units 102. However, the other display unit 102 may include the display device 151, the input device 152, and the sensor 153. The display device 151 is, for example, a device that displays information such as a display or a projector. The input device 152 is, for example, a device that inputs an operation such as movement, change in the direction and the size, deletion, and editing of the object 202 on a screen displayed by the display device 151. For example, the input device 152 may be a touch sensor that is integrally provided with the display device 151 such as a display or may be an imaging device such as a camera that receives an input of a light spot track drawn by an infrared pen and the like. The sensor 153 is, for example, a device that detects a user around the display screen of the display device 151. The sensor 153 may be, for example, an imaging device such as a camera that puts the display screen and surroundings of the display screen within an angle of view or may be a depth sensor and the like. In an example, the imaging devices may be used for both of the input device 152 and the sensor 153.

Note that it is not necessary for the display unit 102 to integrally include the display device 151, the input device 152, and the sensor 153, and it is sufficient that the display unit 102 be connected to the display device 151, the input device 152, and the sensor 153. The display unit 102 may display information on the display device 151 according to an instruction of the server 101 or may notify the server 101 of information input via the input device 152 and the sensor 153.

Then, the server 101 may perform control for sharing screens of the display device 151 of the display unit 102 to be controlled in the same base and the display device 151 of the display unit 102 to be controlled by another server 101 in the other base. Note that to share the screens is, for example, to share displayed content between a display screen 201 in a certain base and a display screen 201 in another base and may be to display the same object in correlated arrangement or layout on the plurality of display screens 201 in an example. Furthermore, in the following description, when the server 101, the display unit 102, and the display screen 201 of the display unit 102 are provided in the base or when a user stays in the base, this state may be expressed as to belong to the base.

Here, for example, in a case where the display screen is shared by the plurality of bases, there is a case where user's operations interfere with each other between the bases, for example, a case where an object used by a user in a certain base is operated by a user in the other base.

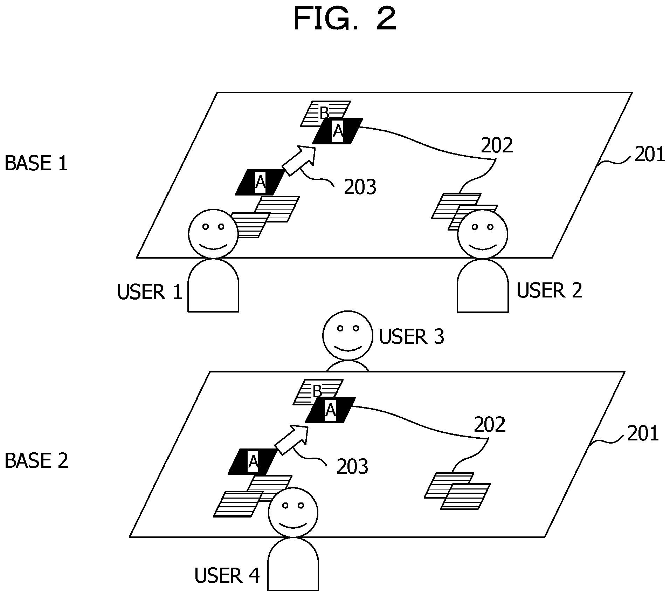

FIG. 2 is a diagram illustrating interference by the user's operation between the bases. In FIG. 2, the display screen 201 of the display unit 102 provided in the base 1 and the display screen 201 of the display unit 102 provided in the base 2 are illustrated. Note that screens of the display screen 201 of the display unit 102 provided in the base 1 and the display screen 201 of the display unit 102 provided in the base 2 are shared, and a common object 202 is displayed.

Here, for example, it is assumed to move an object A in a direction indicated by an arrow 203 because a user 1 in the base 1 does not need the object A among the objects 202 displayed on the display screen 201. In this case, in a case where a user 4 is using the object A in the base 2, the object A that is used moves away by an operation of the user 1 in the other base, and the user 4 feels inconvenience.

Furthermore, in FIG. 2, the object A that has been moved by the user 1 in the base 1 overlaps with an object B at the destination and is displayed on the upper side of the object B. In this case, the object A prevents a user 3 who is using the object B in the base 2 from seeing the object B, and the user 3 feels inconvenience. In this way, in a case where the screen is shared by the plurality of bases, there is a case where the user's operations on the object interfere with each other. Then, for example, in a case where the single display screen 201 is shared by the plurality of users in one base, the location of other user can be visually recognized. Therefore, it is possible to implicitly avoid the interference with others. However, in a case where the screen is shared between the bases, it is difficult to grasp a behavior of a user in the other base. Therefore, it is desired to provide a technology that can reduce interference by user's works for operating the object 202 in a case where the screen is shared between the plurality of bases.

Therefore, in the embodiment, the server 101 performs, for example, the following control.

(1) Setting of User Region
(2) Hierarchy of User Regions for Each Base
(3) Exclude Object That Does Not Belong to User Region from User Region

(1) In the setting of the user region, the server 101 sets a user region in which an operation authority is allocated to the display screen 201 to each user who uses the display screen 201. Then, the object in the user region prohibits an operation from the other base 2. With this prohibition, for example, it can be prevented that an object used by a user in a certain base is operated by a user in another base. Note that there is a case where the user region is referred to, for example, as an operation region in another embodiment.

(2) In the hierarchy of the user regions for each base, the server 101 displays an object 202 in a user region set by a user who belongs to the base same as the base to which the server 101 belongs in front of the other object 202. Therefore, for example, it can be prevented that an object 202 in a user region 400 in a certain base is hidden by the other object 202 operated by a user who belongs to the other base.

(3) In processing for excluding an object 202 that does not belong to the user region from the user region, the server 101 prohibits the object 202 to stay in the user region in a case where the object 202 that does not belong to the user region enters the user region. Therefore, for example, it can be prevented that an object 202 that is not used by a user prevents the work by staying in the user region by an operation of other person and the like.

Therefore, according to the embodiment, in a case where the screen is shared by the plurality of bases, the interference by the work of the user who operates the object can be prevented. Hereinafter, the embodiment will be further described in detail.

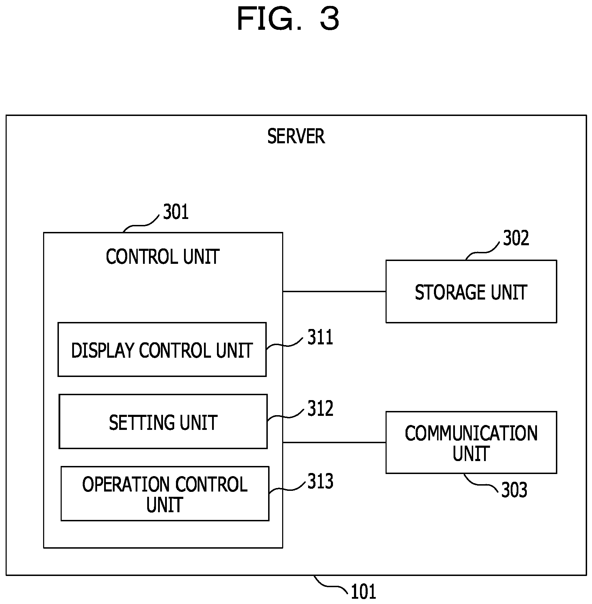

FIG. 3 is a diagram illustrating a block configuration of the server 101 according to the embodiment. The server 101 includes, for example, a control unit 301 and a storage unit 302. The control unit 301 includes, for example, a display control unit 311, a setting unit 312, an operation control unit 313, and the like. The storage unit 302 stores, for example, information such as user region information 1200, object information 1300, and the like to be described later. Details of each unit and the information stored in the storage unit 302 will be described later.

<(1) Setting of User Region>

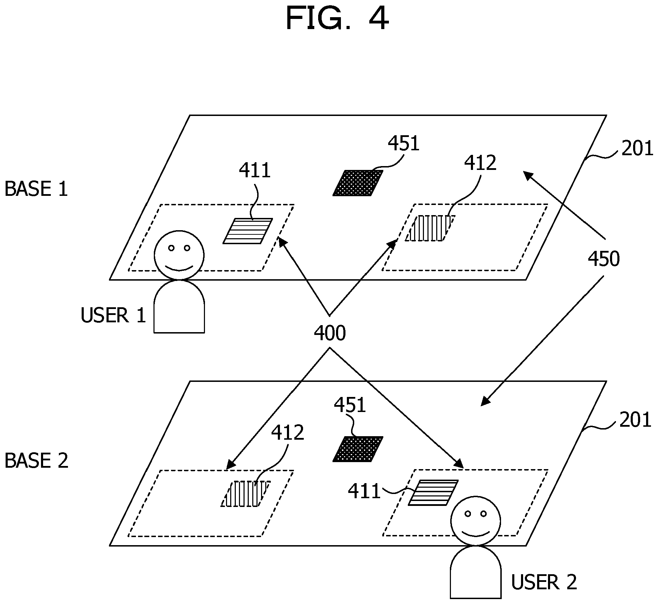

The setting of the user region will be further described in detail. FIG. 4 is a diagram illustrating setting of the user regions 400. As illustrated in FIG. 4, in the embodiment, the control unit 301 of the server 101 allocates the user regions on the display screen 201 as work regions respectively dedicated for users who belong to the same base. The control unit 301 of the server 101 receives, for example, an image of surroundings of the display screen 201 captured by the sensor 153 such as an imaging device and information detected by the sensor 153 such as a depth sensor from the display unit 102 and recognizes a position of the user by using the received information. For example, the control unit 301 can detect the position of the user by using a technology for detecting a person from an image and detecting a tag attached to the user. Alternatively, for example, in a case where the input device 152 is an infrared pen, the control unit 301 can detect the position of the user from the coordinates on the display screen 201 pointed by infrared rays emitted by the infrared pen.

Subsequently, the control unit 301 sets the user region 400 in a region on the display screen 201 close to the detected position of the user (for example, hand). For example, the control unit 301 may collate the detected position of the user with the coordinates on the display screen 201 and may determine at which position on the display screen 201 the user region 400 is created. Note that the user region 400 may have, for example, various shapes such as a rectangle or a circle. Furthermore, the size of the user region 400 may be a predetermined size or may be manually set by a user. Alternatively, the size of the user region 400 may vary according to the number of users who uses the display screen 201 at the same time. For example, when the number of users of the display screen 201 increases, the size of the user region 400 per person is reduced. Furthermore, the control unit 301 may move the user region 400 so as to follow the position of the user on the display screen 201 by recalculating the position of the user region 400 in accordance with the movement of the user.

In FIG. 4, for example, the control unit 301 of the server 101 belonging to the base 1 allocates the user region 400 to the user 1 on the display screen 201 of the base 1. Furthermore, for example, the control unit 301 of the server 101 belonging to the base 2 allocates the user region 400 to the user 2 on the display screen 201 of the base 2. The information regarding the user region 400 may be synchronized between the servers 101 in different bases. In other words, for example, the control unit 301 may notify the server 101, that shares the display screen 201 and is in the other base, of the information regarding the allocated user region 400.

The object 202 included in the user region 400 can be operated from the display screen 201 in the base in which the user region 400 is allocated to the user, and the operation on the object 202 from the display screen 201 in the other base 2 is prohibited. Note that, a state where the object 202 can be operated on a certain display screen 201 may express that the object 202 can be operated by an input to the input device 152 of the display unit 102 connected to the display device 151 that displays the display screen 201. Furthermore, the prohibition of the operation on the object 202 from a certain display screen 201 may express prohibition of the operation on the object 202 from the input device 152 of the display unit 102 connected to the display device 151 that displays the display screen 201.

Furthermore, hereinafter, there is a case where an object included in the user region 400 of the user who belongs to the base same as the display unit 102 that displays the display screen 201 is referred to as an own base object 411. The own base object 411 displayed on the display screen 201 is an object 202 that can be operated from the display screen 201. However, the operation from the display screen 201 in the other base 2 is prohibited.

On the other hand, there is a case where an object 202 included in the user region 400 of the user who belongs to the base different from the display unit 102 that displays the display screen 201 is referred to as the other base object 412. For example, the other base object 412 displayed on the display screen 201 is an object 202 of which the operation from the display screen 201 is prohibited. However, the operation of the other base object 412 from the display screen 201 in the other base is permitted.

Furthermore, the control unit 301 may set a region on the display screen 201 that is not included in any user region 400 as a shared region 450. Furthermore, hereinafter, there is a case where an object 202 in the shared region 450 is referred to as a shared object 451. Then, the control unit 301 may perform control so that the shared object 451 in the shared region 450 can be operated on all the display screens 201.

For example, in FIG. 4, an object 202 in the user region 400 of the user 1 on the display screen 201 in the base 1 is the own base object 411 and can be operated on the display screen 201 in the base 1. On the display screen 201 in the base 2, the object 202 in the user region 400 of the user 1 is the other base object 412, and the operation on the object 202 from the display screen 201 in the base 2 is prohibited. Therefore, the user who belongs to the base 2 is prevented from operating the object 202 that is used by the user 1 in the base 1.

<(2) Hierarchy of User Regions for Each Base>

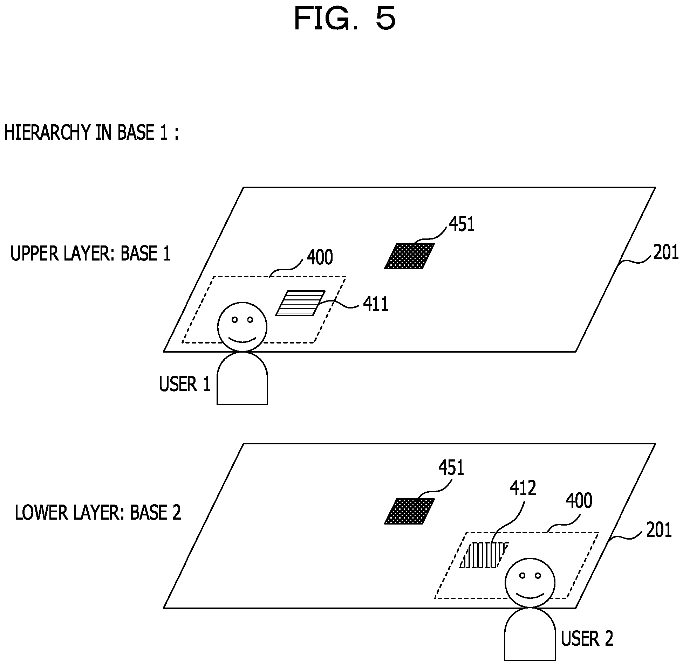

Subsequently, a hierarchy of the user regions 400 for each base will be described. FIGS. 5 to 7 are diagrams for explaining the hierarchy of the user regions 400 for each base according to the embodiment.

FIG. 5 is a diagram for explaining the hierarchy of the user regions 400 in the base 1. As illustrated in FIG. 5, the control unit 301 of the server 101 in the base 1 sets the user region 400 allocated to the user 1 who belongs to the same base 1 to an upper hierarchy and sets the user region 400 allocated to the user 2 who belongs to the other base 2 to a lower hierarchy. In other words, the control unit 301 of the server 101 in the base 1 disposes the user region 400 of the user 1 who belongs to the same base to the upper hierarchy.

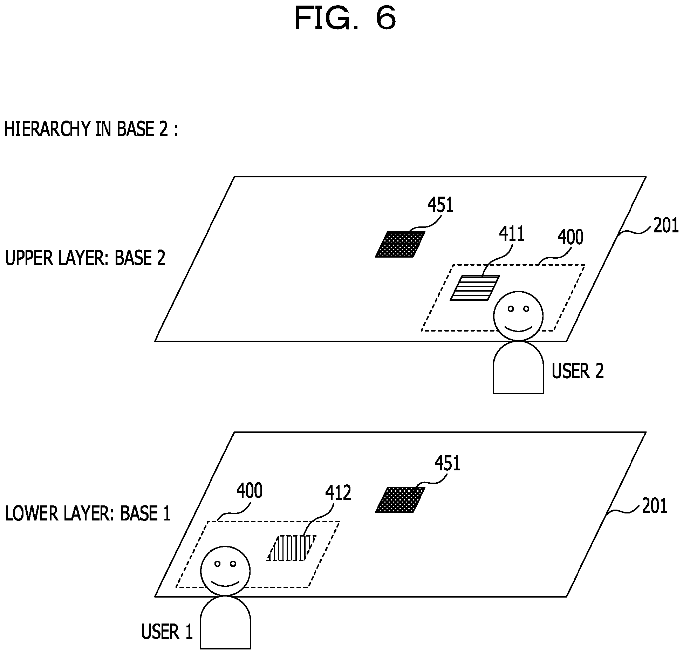

Furthermore, FIG. 6 is a diagram for explaining the hierarchy of the user regions 400 in the base 2. As illustrated in FIG. 6, the control unit 301 of the server 101 in the base 2 sets the user region 400 allocated to the user 2 who belongs to the same base 2 to an upper hierarchy and sets the user region 400 allocated to the user 1 who belongs to the other base 1 to a lower hierarchy. In other words, unlike the description with reference to FIG. 5, the control unit 301 of the server 101 in the base 2 disposes the user region 400 of the user 2 who belongs to the same base to the upper hierarchy.

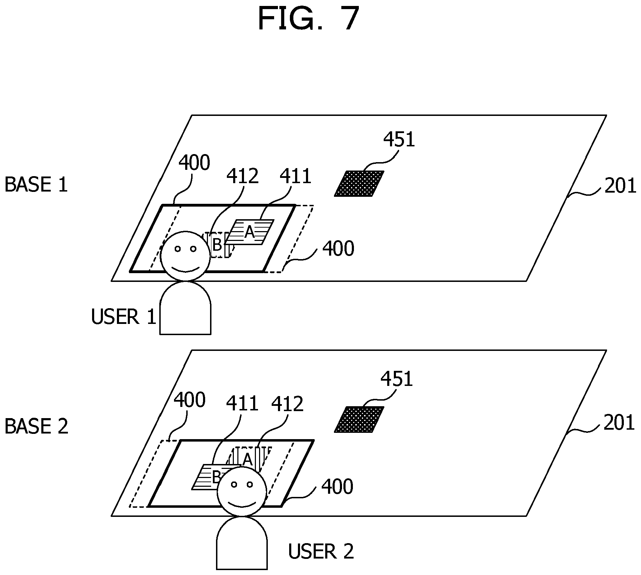

FIG. 7 is a diagram illustrating display of the user region 400 for each base according to the hierarchy. As described with reference to FIG. 5, the control unit 301 of the server 101 in the base 1 disposes the user region 400 of the user 1 who belongs to the same base 1 to the upper hierarchy than the user region 400 of the user 2 who belongs to the other base 2. Therefore, in the base 1, the control unit 301 of the server 101 displays the own base object 411 that belongs to the user region 400 of the user 1 who belongs to the same base 1 in front of the other base object 412 that belongs to the user region 400 of the user 2 who belongs to the other base 2.

On the other hand, as described with reference to FIG. 6, the control unit 301 of the server 101 in the base 2 disposes the user region 400 of the user 2 who belongs to the same base 2 to the upper hierarchy than the user region 400 of the user 1 who belongs to the other base 1. Therefore, in the base 2, the control unit 301 of the server 101 displays the own base object 411 that belongs to the user region 400 of the user 2 who belongs to the same base 2 in front of the other base object 412 that belongs to the user region 400 of the user 1 who belongs to the other base 2.

As a result, the object A is displayed on the front in the base 1, and on the other hand, the object B is displayed on the front in the base 2. In this way, since the control is performed for each base so that the own base object 411 is displayed in front of the other base object 412, the user is not prevented from browsing and operating the own base object 411 by the other base object 412, and convenience is improved.

<(3) Exclude Object That Does Not Belong to User Region from User Region>

Processing for excluding an object that does not belong to the user region 400 from the user region 400 will be described. In the embodiment, as described above, for example, in a case where an object 202 that does not belong to the other user region 400 enters from the outside of the user region 400, the server 101 performs control so that the object 202 does not stay in the user region 400. Therefore, for example, it can be prevented that the object 202 enters and stays in a user region 400 of a certain user by an operation of other user and the like and prevents the work of the user.

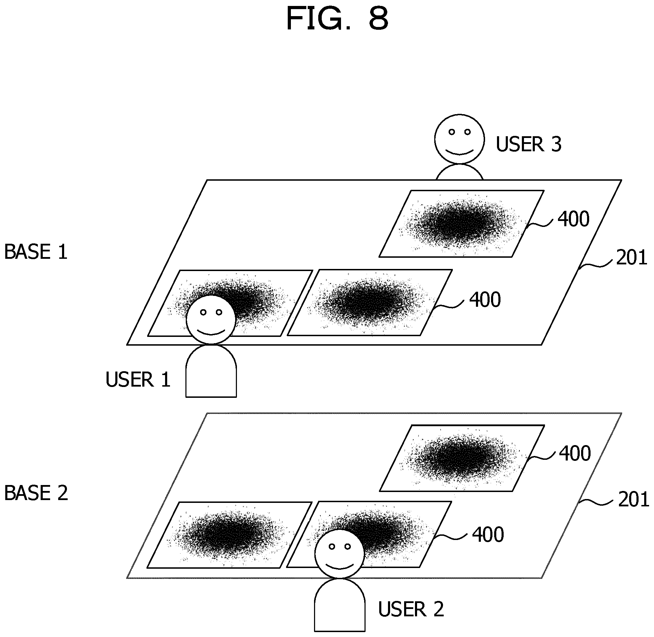

Note that the processing for excluding the object 202 that does not belong to the user region 400 from the user region 400 can be performed, for example, by generating a gradient in the user region 400 and moving the object 202 according to the gradient. Hereinafter, with reference to FIGS. 8 to 11, processing for moving the object 202, that enters the user region 400, by using the gradient generated in the user region 400 will be described.

FIG. 8 is a diagram illustrating a gradient set for the user region 400. In FIG. 8, the control unit 301 generates the gradient so that the plane becomes higher as it approaching closer to the center of the user region 400. Note that it is indicated that, as the density of black dots in the user region 400 is higher, the height is increased. In other words, in the example in FIG. 8, the gradient is formed so that the user region 400 is formed like a mountain and the shared region 450 is formed like a valley.

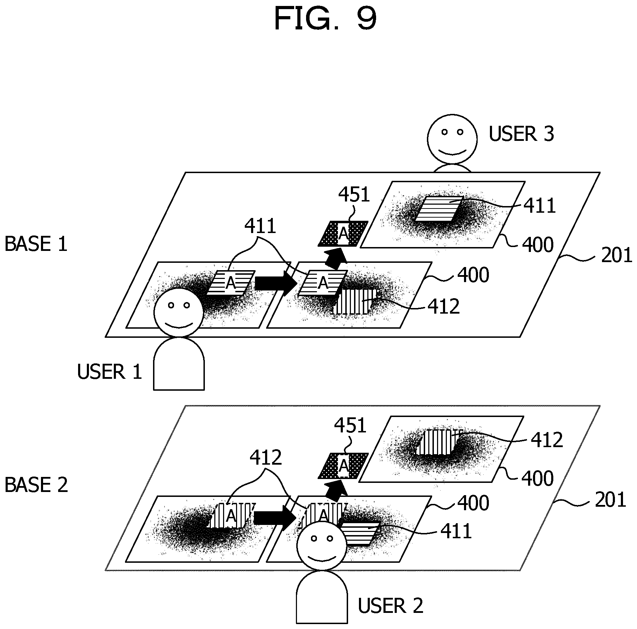

FIG. 9 is a diagram illustrating movement of the object 202 according to the gradient. For example, it is assumed that the user 1 in the base 1 in FIG. 9 perform an operation for moving the object A from the user region 400 of the user 1 to the outside. In this case, the gradient is applied to the object A when the object A is out of the user region 400 to which the object A belongs. Therefore, when entering the user region 400 of the user 2 in the base 2, the object A cannot climb the gradient of the user region 400 of the user 2 and moving down the gradient and is discharged to the outside of the user region 400 of the user 2. At the position where the movement caused by the gradient is stopped, the object A becomes the shared object 451. Therefore, the user 1 can discharge the object 202 in the user region 400 of the user 1 toward the shared region 450 without worrying about a work of others. Furthermore, the user 2 can continue to work in the user region 400 of the user 2 without being disturbed by the object A.

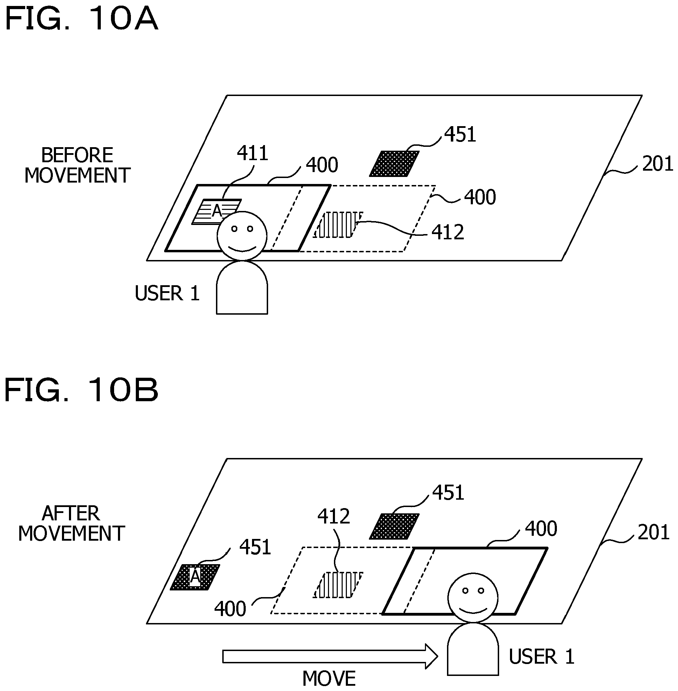

Furthermore, FIG. 10 is a diagram illustrating application of the gradient according to the movement of the user region 400. For example, it is assumed that the user 1 move in a certain base. Note that FIG. 10(a) illustrates a state before the movement, and FIG. 10(b) illustrates a state after the movement. For example, it is assumed that the user 1 move from the state of FIG. 10(a) to the state of FIG. 10(b). In this case, the object A that belongs to the user region 400 of the user 1 in FIG. 10(a) is out of the user region 400 according to the movement. Then, the control unit 301 applies the gradient to the object A that is out of the user region 400 and sets the object A as the shared object 451 as illustrated in FIG. 10(b) at the position where the movement by the gradient is stopped. Furthermore, as the user 1 moves, the user region 400 of the user 1 passes over the other base object 412 in the user region 400 that belongs to the other base. However, the control unit 301 does not apply the gradient to the object 202 included in the user region 400. Therefore, the position of the other base object 412 does not move between FIG. 10(a) and FIG. 10(b).

For example, as described above, by setting the gradient to the user region 400, it is possible to exclude the object that does not belong to the user region 400 from the user region 400 and prohibit that the object stays in the user region 400.

Subsequently, the generation of the gradient and the movement of the object 202 by the gradient described above will be further described in detail.

[Generation of Gradient and Movement of Object by Gradient] For example, a gradient can be generated by applying a gradient map based on a mixed Gaussian distribution to the user region 400. An exemplary procedure will be described below.

(Procedure 1) The control unit 301 creates an energy function on the display screen 201 on the basis of the size and the position of the user region 400 in each base.
(Procedure 2) The control unit 301 creates a gradient map on the basis of the energy function.
(Procedure 3) The control unit 301 repeatedly updates the position of the object 202 on the basis of the gradient map.

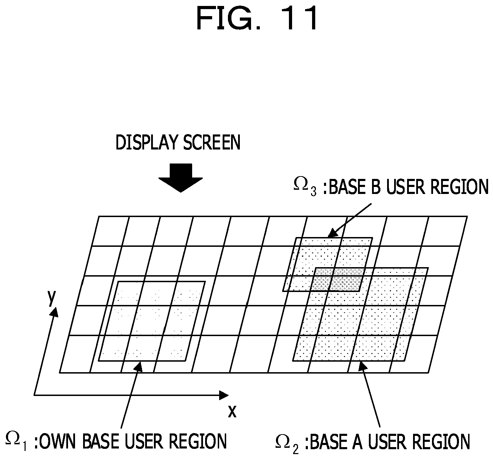

(Procedure 1) The creation of the energy function will be described. The control unit 301 places a two-dimensional Gaussian function at the center of each user region 400. Then, the control unit 301 generates an energy function f(x,y) by using weighted average sum of the Gaussian function. For example, an energy function f(x,y) at coordinates (x,y) on the display screen illustrated in FIG. 11 can be expressed by the following equation 1.

[Formula 1]

$$f(x,y) = \sum_{\Omega_i; i=0}^{K} w \frac{1}{2\pi\sigma_x\sigma_y\sqrt{1-\rho^2}} e^{-\frac{1}{2(1-\rho^2)}\left[\frac{(x-\mu_x)^2}{\sigma_x^2} - 2\rho\frac{(x-\mu_x)(y-\mu_y)}{\sigma_x\sigma_y} + \frac{(y-\mu_y)^2}{\sigma_y^2}\right]}$$

... Equation 1

However, in the equation 1, each variable represents as follows.

$\Omega_i$: i-th user region
$\sigma_x$, $\sigma_y$: parameters indicating Gaussian spread. Depend on the size of $\Omega_i$
$\mu_x$, $\mu_y$: center positional coordinates of user region $\Omega_i$
$\rho$: constant
w: constant representing weight
K: the number of user regions

(Procedure 2) The creation of the gradient map on the basis of the energy function will be described. The control unit 301 obtains a partial derivative with respect to x,y of the energy function f(x,y). Two expressions indicated in the following equation 2 respectively indicate a partial derivative with respect to x of the energy function f(x,y) and a partial derivative with respect to y of the energy function f(x,y).

[Formula 2]

Partial derivative with respect to x of f(x,y)  $: f_x = \sum_{\Omega_i; i=0}^{K} ADe^{-BC}$

Partial derivative with respect to y of f(x,y)  $: f_y = \sum_{\Omega_i; i=0}^{K} AEe^{-BC}$

... Equation 2

Note that, in the equation 2, each variable represents as follows.

[Formula 3]

$$A = w \frac{1}{2\pi\sigma_x\sigma_y\sqrt{1-\rho^2}}$$

$$B = \frac{1}{2(1-\rho^2)}$$

$$C = \left\{ \frac{(x-\mu_x)^2}{\sigma_x^2} - 2\rho\frac{(x-\mu_x)(y-\mu_y)}{\sigma_x\sigma_y} + \frac{(y-\mu_y)^2}{\sigma_y^2} \right\}$$

$$D = \left\{ \frac{(x-\mu_x)}{\sigma_x^2} - 2\rho\frac{(y-\mu_y)}{\sigma_x\sigma_y} \right\}$$

$$E = \left\{ -2\rho\frac{(y-\mu_y)}{\sigma_x\sigma_y} + \frac{(y-\mu_y)}{\sigma_y^2} \right\}$$

Here, a gradient strength at the coordinates (x,y) can be expressed by the following equation 3 by using the two expressions indicated in the equation 2.
[Formula 4]

$$L(x, y) = \sqrt{f_x^2 + f_y^2}$$

... Equation 3

Furthermore, a gradient direction at the coordinates (x,y) can be expressed by the following equation 4 by using the two expressions indicated in the equation 2.
[Formula 5]

$$\theta(x, y) = a\tan(\frac{f_x}{f_y})$$

... Equation 4

According to the equations 3 and 4 above, the gradient strength and the gradient direction at the coordinates (x,y) can be obtained.

(Procedure 3) The update of the position of the object 202 on the basis of the gradient map will be described. The control unit 301 acquires coordinates $(x_0, y_0)$ of an initial object 202 when the application of the gradient to the object 202 is started, for example, as the object 202 is out of the user region 400 by the user's operation.

Subsequently, the control unit 301 repeatedly updates the positional coordinates of the object 202 on the basis of the gradient map. New positional coordinates of the object 202 updated according to the gradient map can be obtained by the following equation 5 by using the equation of the gradient strength indicated in the equation 3 and the equation of the gradient direction indicated in the equation 4.
[Formula 6]

$$x_i = x_{i-1} + L(x_{i-1}, y_{i-1})\cos(\theta(x_{i-1}, y_{i-1}))$$

$$y_i = y_{i-1} + L(x_{i-1}, y_{i-1})\sin(\theta(x_{i-1}, y_{i-1})) \qquad \text{... Equation 5}$$

Note that, in the equation 5, the reference $x_i$ is an updated x coordinate. Furthermore, the reference $y_i$ is an updated y coordinate. Furthermore, the reference i indicates the number of update loops, and i = 1 is satisfied at the time of the first update.

Then, the control unit 301 may repeatedly update the positional coordinates as described above until an end condition in the following equation 6 is satisfied. Note that a predetermined small value close to zero may be set to T in the following end condition.

[Formula 7]

$$L(x_i, y_i) < T \qquad \text{... Equation 6}$$

For example, as described above, the control unit 301 can execute the processing for excluding the object 202 that does not belong to the user region 400 from the user region 400 by using the gradient. Note that, for example, in a case where the size or the position of the user region 400 is changed in each base, the control unit 301 may execute the processing of (procedure 1) and (procedure 2) described above, recalculate the energy function f(x,y), and update the gradient map.

Note that the processing for excluding the object 202 that does not belong to the user region 400 from the user region 400 according to the embodiment is not limited to the above processing using the gradient. For example, in another embodiment, in a case where the object 202 that does not belong to the user region 400 enters the user region 400, the control unit 301 may prevent the object 202 from entering the user region 400 by flicking out the object 202 by the end of the frame of the user region 400.

As described above, according to the embodiment, the control unit 301 executes at least one of the control including (1) the setting of the user region, (2) the hierarchy of the user regions for each base, and (3) exclusion of the object that does not belong to the user region from the user region. Therefore, according to the embodiment, in a case where the screen is shared by the plurality of bases, it can be reduced that the work of the user to the object 202 interferes with the work of the user in the other base.

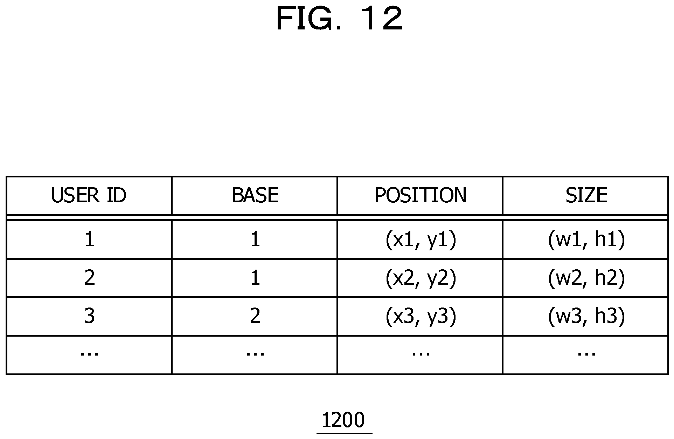

Subsequently, share control processing according to the embodiment will be described in detail with reference to FIGS. 12 to 21.

FIG. 12 is a diagram illustrating the user region information 1200 according to the embodiment. The user region information 1200 includes, for example, an entry in which information regarding the user region 400 allocated to the user is registered. For example, the entry of the user region information 1200 may include information regarding a user identifier (ID), a base, a position, and a size. The user ID is, for example, information for identifying the user region 400. The base is, for example, information indicating a base where the user to whom the user region 400 is allocated stays. The position is information indicating a position where the user region 400 is disposed on the display screen 201. In an example, to the information, coordinates on the display screen 201 at which a predetermined point in the user region 400 such as the center of the user region 400 is disposed may be registered. Furthermore, the size is information indicating the size of the user region 400. In an example, to the size, information for specifying a vertical width and a horizontal width of the user region 400 may be registered. Note that, in the example in FIG. 12, the information indicating the base is registered in the user region information 1200. However, the embodiment is not limited to this. For example, as illustrated in FIG. 1, it is assumed that the plurality of display units 102 be included in the base. In this case, instead of the base, information for identifying a display device 151 that displays a display screen 201 in which the user region 400 is allocated to the user may be registered in the user region information 1200. In other words, the user region 400 may be allocated to the display screen 201, and the information for identifying the display device 151 that displays the allocated display screen 201 may be registered in the user region information 1200. Then, the user region 400 may be identified, for example, as a user region 400 of the other base allocated to a display screen 201 of the shared destination that is shared by using the information for identifying the display device 151 registered in the user region information 1200.

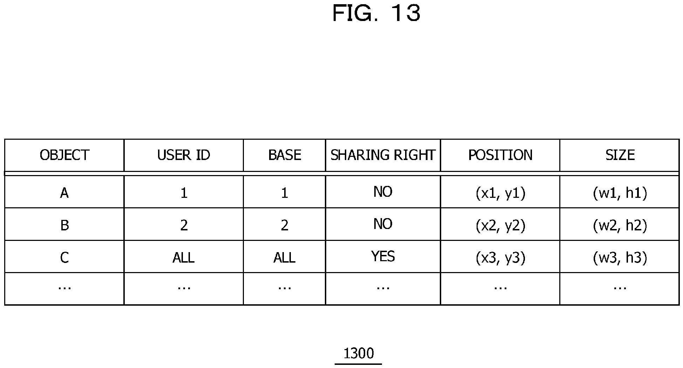

FIG. 13 is a diagram illustrating the object information 1300 according to the embodiment. In the object information 1300, for example, an entry including information regarding the object 202 displayed on the display screen 201 is registered. The entry includes, for example, an object, a user ID, a base, a sharing right, a position, and a size. The object of the object information 1300 is information for identifying an object 202 corresponding to the entry. The user ID is information for identifying a user region 400 to which the object 202 corresponding to the entry belongs. The base is information indicating a base where an operation of the object 202 corresponding to the entry is permitted. For example, in a case where the object 202 is the shared object 451, all the bases (all) may be set as the base. The sharing right is information indicating whether or not the object 202 corresponding to the entry has the sharing right, and the object 202 included in the shared region 450 is set to have the sharing right. The position is information indicating a position of the object 202 corresponding to the entry on the display screen 201, and for example, may be coordinates on the display screen 201 at which a predetermined point in the object 202 such as the center of the object 202 is disposed. The size is information indicating a display size of the object 202, and for example, information for specifying the vertical width and the horizontal width of the object 202 may be registered. Note that, in the example in FIG. 13, the information indicating the base is registered in the object information 1300. However, the embodiment is not limited to this. For example, as illustrated in FIG. 1, it is assumed that the plurality of display units 102 be included in the base. In this case, instead of the base, information for identifying the display device 151 that displays the display screen 201 in which the user region 400 to which the object 202 of the entry belongs is allocated may be registered in the object information 1300.

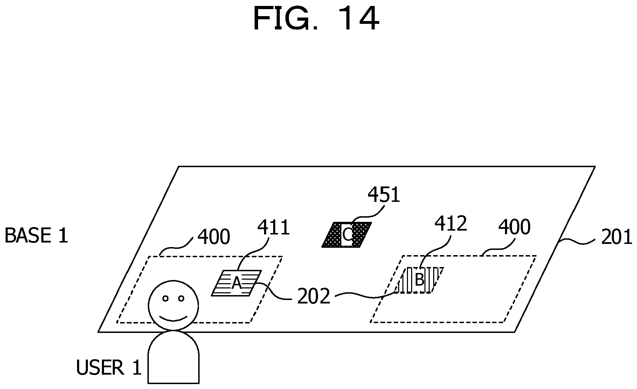

Then, as illustrated in FIG. 14, on the basis of the user region information 1200 and the object information 1300, the control unit 301 can dispose the user region 400 on the display screen 201 and display the object 202.

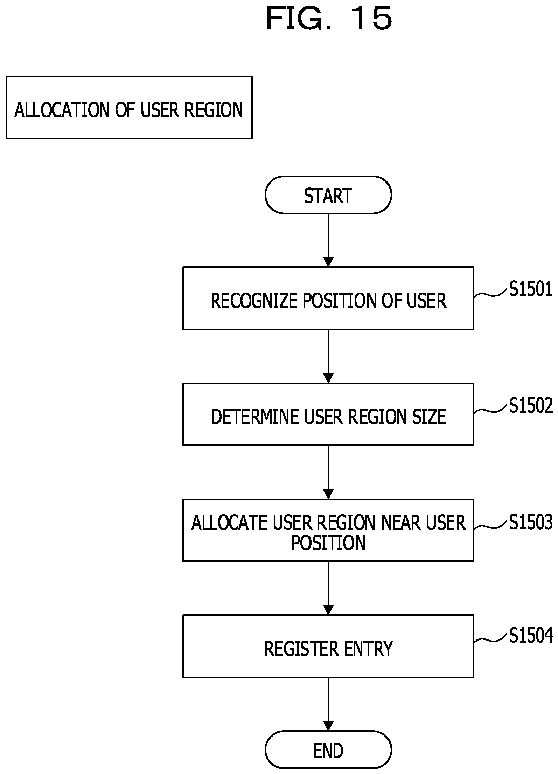

FIG. 15 is a diagram illustrating an operation flow of allocation processing of the user region 400 according to the embodiment. The control unit 301 of the server 101 may start the operation flow in FIG. 15, for example, when an instruction to allocate the user region 400 is input.

In step 1501 (hereinafter, step is described as "S", and for example, step 1501 is described as S1501), the control unit 301 recognizes the position of the user. For example, the control unit 301 receives an image of surroundings of the display screen 201 captured by the sensor 153 such as an imaging device and information detected by the sensor 153 such as a depth sensor from the display unit 102 and recognizes the position of the user by using the received information. The position of the user can be detected, for example, by using a technology for detecting a person from an image, a tag attached to the user, and information regarding the input device 152 used by the user. For example, in a case where the input device 152 is an infrared pen, the user region 400 can be determined from coordinates on the display screen 201 pointed by infrared rays emitted by the infrared pen.

In S1502, the control unit 301 determines the size of the user region 400 corresponding to each recognized user. The control unit 301 may determine the size of the user region 400, for example, to be a predetermined size, may determine the size by receiving size specification from the user, or may determine the size according to the number of users who use the display screen 201 at the same time.

In S1503, the control unit 301 allocates the user region 400 having the determined size to a region on the display screen 201 near the recognized position of the user. For example, the control unit 301 may allocate the user region 400 so as to include the position of the display screen 201 that is the closest to the recognized position of the user.

In S1504, the control unit 301, for example, registers information regarding the allocated user region 400 in the user region information 1200, and this operation flow is terminated. Note that, for example, in a case where the display screen 201 is shared by the display unit 102 in the other base, the control unit 301 may notify the server 101 that controls the display unit 102 of the shared destination of information regarding an entry that is newly registered in the user region information 1200. The server 101 that controls the display unit 102 of the shared destination and has received the notification updates the user region information 1200 by using the notified information regarding the user region 400 so that the information in the user region information 1200 is synchronized between the servers 101. Then, the server 101 that controls the display unit 102 of the shared destination controls display on the display screen 201 of the display unit 102 of the shared destination by using the updated user region information 1200.

According to the operation flow in FIG. 15, the control unit 301 can allocate the user region 400 to the user around the display screen 201.

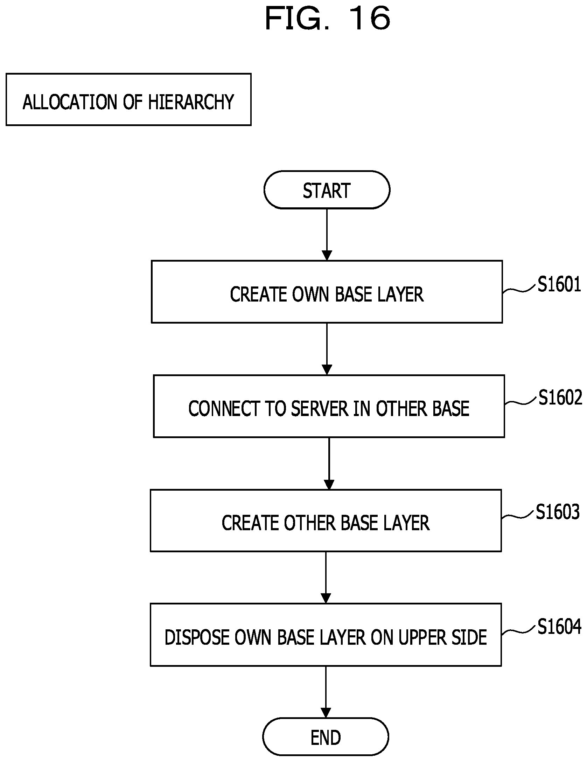

Subsequently, hierarchy allocation processing according to the embodiment will be described. FIG. 16 is a diagram illustrating an operation flow of the hierarchy allocation processing according to the embodiment. For example, the control unit 301 of the server 101 may start the operation flow in FIG. 16 when an instruction for sharing the display screen 201 with other base is input.

In S1601, the control unit 301 creates a hierarchy corresponding to the own base. The control unit 301 creates an own base hierarchy in which an object 202 of an entry in which information indicating the own base is registered is allocated to the base, in the object information 1300 of the storage unit 302. Note that, in the object information 1300, the object 202 of the entry in which the information indicating the own base is registered to the base is an object 202 included in the user region 400 in the own base registered in the user region information 1200.

In S1602, the control unit 301 is connected to a server 101 in other base that controls a display unit 102 in the other base that is specified as a shared destination by a sharing instruction. Then, the control unit 301 transmits and receives the information regarding the server 101 in the other base, the user region information 1200, and the object information 1300 and updates the information regarding the user region information 1200 and the object information 1300. For example, each of the control units 301 of the servers 101 in the own base and the other base may share the information by registering the entry of the user region information 1200 and the object information 1300 in the base of the partner to the user region information 1200 and the object information 1300 of the own base.

In S1603, in the updated object information 1300, the control unit 301 creates the other base hierarchy in which an object 202 of an entry in which information indicating the other base is registered to the base is allocated.

In S1603, the control unit 301 disposes an own base layer on the upper side of the other base layer, and this operation flow is terminated. For example, the control unit 301 generates a display screen 201 that displays the object 202 allocated to the own base layer in front of the object 202 allocated to the other base layer and displays the display screen 201 on the display unit 102.

As described above, according to the operation flow in FIG. 16, the object 202 that belongs to the user region 400 in the own base is disposed and displayed in front of the object 202 that belongs to the user region 400 in the other base. Therefore, it can be prevented that the object 202 used by the user in the user region 400 allocated to the user is hidden by the object 202 included in the user region 400 allocated to the user in the other base and disturbs the operation.

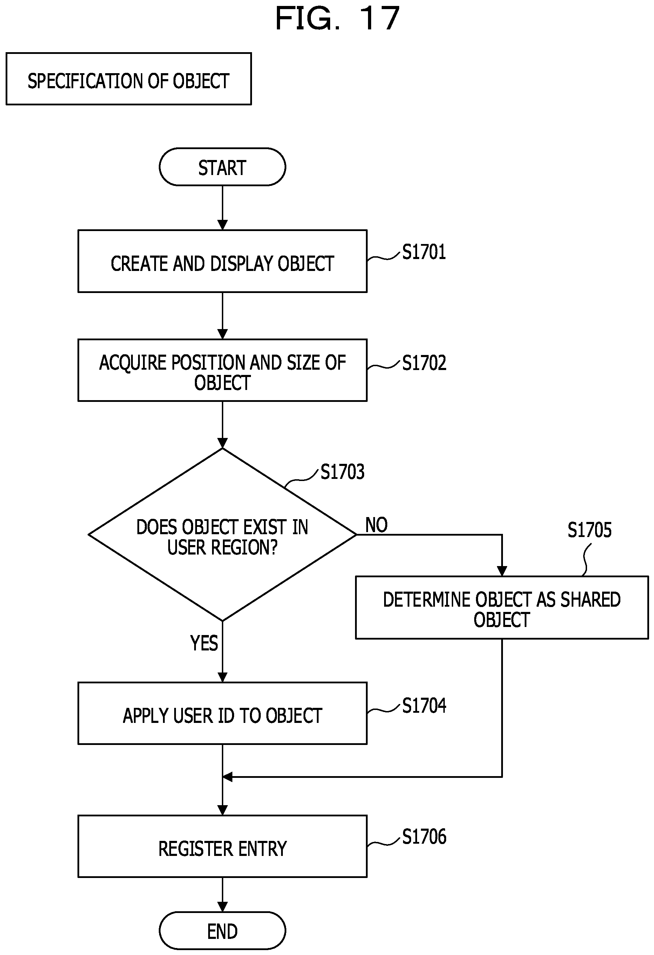

Subsequently, processing for specifying the object 202 according to the embodiment will be described. FIG. 17 is a diagram illustrating an operation flow of the specification processing of the object 202 according to the embodiment. For example, when receiving a notification indicating that an instruction for generating the object 202 is input from the user via the input device 152 in the display unit 102 from the display unit 102, the control unit 301 of the server 101 may start the operation flow in FIG. 17.

In S1701, the control unit 301 generates an object 202 according to the generation instruction and displays the generated object 202 on the display device 151 of the display unit 102 that has notified the input of the generation instruction.

In S1702, the control unit 301 acquires information regarding a position and a size of the generated object 202.

In S1703, the control unit 301 determines whether or not the object 202 exists in the user region 400 of any one of entries registered in the user region information 1200. In a case where the object 202 exists in the user region 400 (YES in S1703), the flow proceeds to S1704.

In S1704, the control unit 301 acquires information regarding a user ID and a base corresponding to the user region 400 including the object 202 from the user region information 1200.

On the other hand, in a case where the object 202 does not exist in the user region 400 in S1703 (NO in S1703), the flow proceeds to S1705. In S1705, the control unit 301 allocates a sharing right to the object 202.

In S1706, the control unit 301 registers the entry of the object 202 in the object information 1300 according to the acquired information regarding the object 202, and this operation flow is terminated. For example, the control unit 301 may generate an entry in which the position and the size acquired in S1702 and the information regarding the user ID and the base acquired in S1704 or the information regarding the sharing right allocated in S1705 are included in an object identifier allocated to the generated object 202. Note that, in a case where the user ID and the base are acquired in S1704, no sharing right may be set. In a case where the sharing right is allocated in S1705, the user ID and the base may be set to all indicating that the user ID and the base are shared by all the users.

Furthermore, for example, in a case where the display screen 201 is shared with the display unit 102 that is controlled by the server 101 in the other base, the control unit 301 may notify the server 101 in the base of the shared destination of the information regarding the object 202 registered in the object information 1300. The server 101 in the base of the shared destination that has received the notification updates the object information 1300 by using the notified information regarding the object 202 so that the object information 1300 is synchronized between the servers 101. Then, the server 101 in the base of the shared destination that has received the notification may display the object 202 on the display screen 201 of the display unit 102 of the shared destination according to the setting of the updated object information 1300.

As described above, the control unit 301 registers the information regarding the object 202 in the object information 1300 according to the operation flow in FIG. 17.

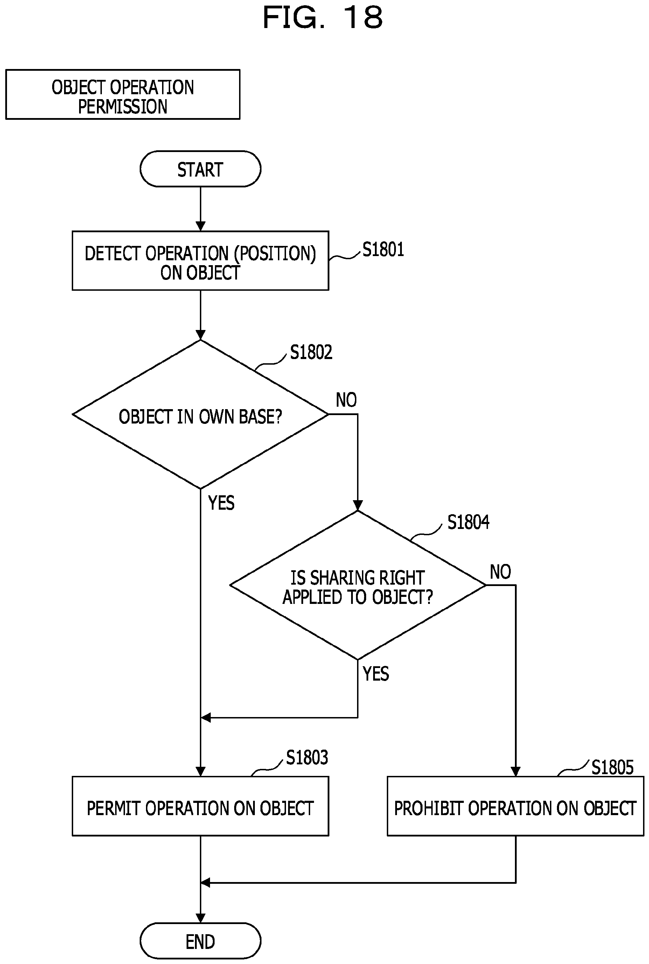

FIG. 18 is a diagram illustrating an operation flow of operation permission processing of the object 202 according to the embodiment. For example, when an operation on the object 202 is input via the input device 152 in the display unit 102 to be controlled, the control unit 301 may start the operation flow in FIG. 18.

In S1801, the control unit 301 detects a position of the object 202 in the display screen 201 when the operation is input. In S1802, the control unit 301 specifies an entry in the object information 1300 in which the position that matches the detected position is registered and determines whether or not the object 202 to which the operation is input is the own base object 411. In a case where the object 202 to which the operation is input is the own base object 411 (YES in S1802), the flow proceeds to S1803. In S1803, the control unit 301 permits the operation on the object 202, applies the input operation to the object 202, and displays the object 202 on the display screen 201 of the display unit 102.

On the other hand, in a case where the object 202 to which the operation is input in S1802 is not the own base object 411 (NO in S1802), the flow proceeds to S1804. In S1804, the control unit 301 refers to the object information 1300 and determines whether or not the sharing right is applied to the object 202 to which the operation is input. In a case where the sharing right is applied (YES in S1804), the flow proceeds to S1803, and the control unit 301 permits the operation on the object 202.

On the other hand, in a case where the sharing right is not applied to the object 202 to which the operation is input in S1804 (NO in S1804), the flow proceeds to S1805.

In S1805, the control unit 301 prohibits the operation on the object 202 and does not perform the operation input to the object 202. This operation flow is terminated. Note that the object 202 of which the operation is prohibited in S1805 is, for example, the other base object 412 that belongs to the user region 400 in the other base.

As described with reference to the operation flow in FIG. 18, the control unit 301 prohibits the operation on the object 202 included in the user region 400 in the other base. Therefore, in a case where the display screen 201 is shared by the plurality of bases, the object 202 used by a user in a certain base can be prevented from being operated by a user in the other base.

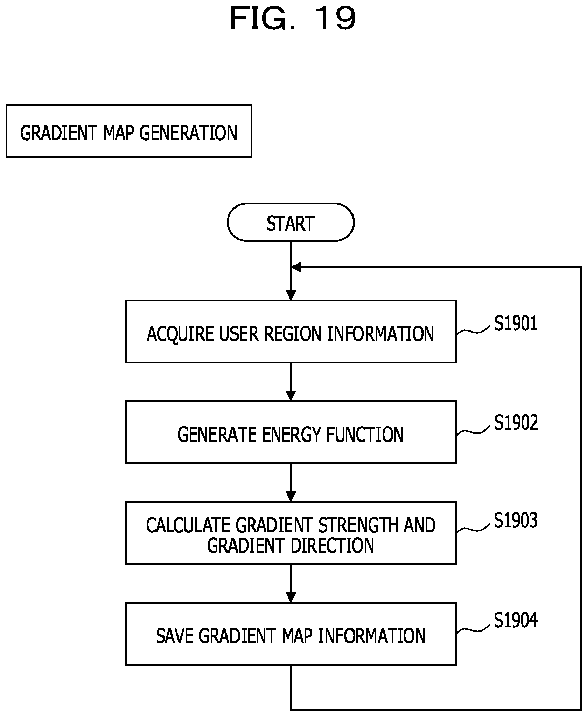

FIG. 19 is a diagram illustrating an operation flow of gradient map generation processing according to the embodiment. For example, after starting to display the information on the display unit 102, when the user region 400 is generated according to the operation flow in FIG. 15, the control unit 301 may start the operation flow in FIG. 19.

In S1901, the control unit 301 refers to the user region information 1200 and acquires information regarding the user region 400. In S1902, an energy function is generated. For example, the control unit 301 may generate the energy function in the equation 1 described in the procedure 1 by using the information regarding the user region 400.

In S1903, the control unit 301 calculates a gradient strength and a gradient direction. For example, the control unit 301 may obtain functions of the gradient strength of the equation 3 and the gradient direction of the equation 4 described in the procedure 2.

In S1904, the control unit 301 may save information regarding a gradient map including the obtained gradient strength and gradient direction in the storage unit 302. Note that, for example, according to the information regarding the gradient map as described in the procedure 3, the control unit 301 may update the position of the object 202 that does not belong to the user region 400 among the displayed objects 202. Furthermore, for example, in a case where the display screen 201 is shared with the display unit 102 that is controlled by the server 101 in the other base, the control unit 301 may notify the server 101 of the shared destination of the information regarding the gradient map. The server 101 of the shared destination that has received the notification may control a display position of the object 202 by using the notified information regarding the gradient map.

When the information regarding the gradient map is saved in the storage unit 302 in S1904, the flow returns to S1901. Then, in a case where the size and the position of the user region 400 are changed in each base, for example, the control unit 301 may execute the processing from S1901 to S1904 again and may update the information regarding the gradient map.

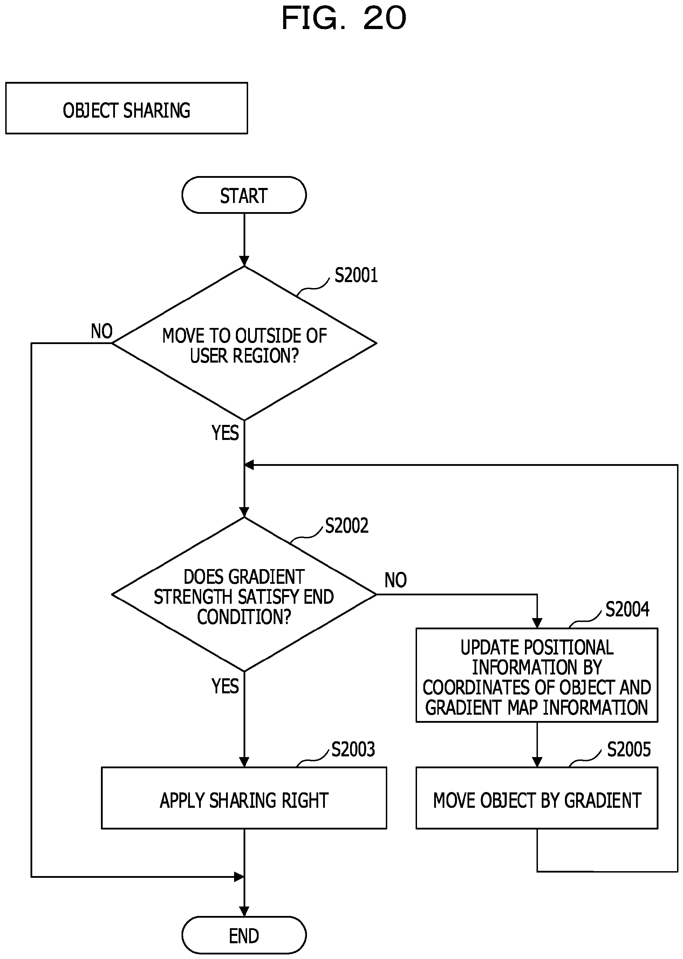

Subsequently, processing for sharing the object 202 will be described. FIG. 20 is a diagram illustrating an operation flow of the object sharing processing. For example, in a case of receiving a notification indicating that movement of the object 202 in the user region 400 that belongs to the own base is input via the input device 152 from the display unit 102, the control unit 301 may start the operation flow in FIG. 20.

In S2001, the control unit 301 determines whether or not the movement of the object 202 is movement to the outside of the user region 400. In a case where the object 202 is moved in the user region 400 (NO in S2001), the control unit 301 executes the input movement of the object 202 and displays the movement on the display screen 201 of the display unit 102, and this operation flow is terminated. On the other hand, in a case where the movement of the object 202 is the movement to the outside of the user region 400 (YES in S2001), the flow proceeds to S2002.

In S2002, the control unit 301 determines whether or not the gradient strength at the position of the object 202 satisfies an end condition. Note that, as the end condition, for example, the end condition in the equation 6 can be used. In a case where the end condition is not satisfied (NO in S2002), the flow proceeds to S2004. In S2004, the control unit 301 updates positional information on the basis of the coordinates of the object 202 and the information regarding the gradient map. For example, the control unit 301 may update the positional information by using the equation 5 described with reference to the procedure 3 above. In S2005, the control unit 301 controls the display unit 102 so as to move the object 202 to the coordinates on the display screen 201 indicated by the updated positional information and displays the moved object 202, and the flow returns to S2002.

Furthermore, in a case where the gradient strength at the position of the object 202 satisfies the end condition in S2002 (YES in S2002), the flow proceeds to S2003. In S2003, the control unit 301 updates a value of an entry corresponding to the object 202 in the object information 1300 and applies a sharing right, and this operation flow is terminated. For example, the control unit 301 may change the user ID and the base to all, set to apply the sharing right, and update the position to the position of the object 202 that has been moved by the gradient.

Note that, for example, in a case where the display screen 201 is shared with the display unit 102 that is controlled by the server 101 in the other base, the control unit 301 may notify the server 101 of the shared destination of the updated information regarding the object information 1300. The server 101 of the shared destination that has received the notification may update the information regarding the object information 1300 according to the notified information so that the information is synchronized between the servers 101.

As described above, the control unit 301 can apply the sharing right to the object 202 outside the user region 400. Note that the control unit 301 controls the display position by applying the gradient to the object 202 outside the user region 400. Therefore, it can be prevented that the object 202 discharged from the user region 400 by a certain user stays in the user region 400 of the other user and disturbs the operation.

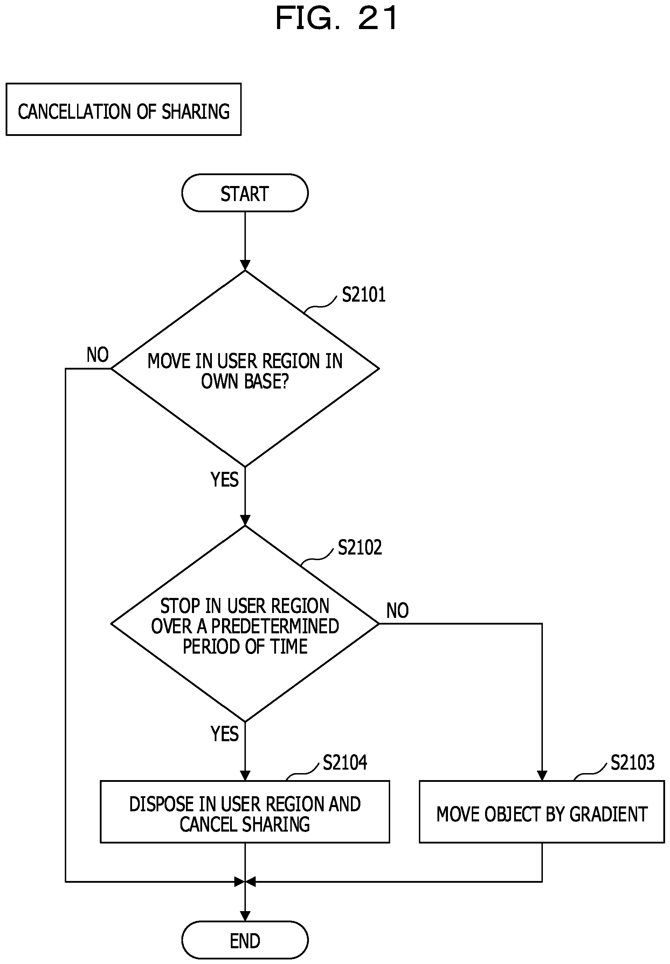

FIG. 21 is a diagram illustrating share cancellation processing according to the embodiment. For example, when receiving a notification indicating that a movement operation is input to the shared object 451 in the shared region via the input device 152 in the display unit 102 to be controlled from the display unit 102, the control unit 301 may start the operation flow in FIG. 21.

In S2101, the control unit 301 refers to the user region information 1200 and determines whether or not the object 202 moves in the user region 400 that belongs to the own base by the movement operation. In a case where the object 202 does not move in the user region 400 that belongs to the own base (NO in S2101), the control unit 301 controls the display unit 102 so that the object 202 moves on the display screen 201 according to the movement operation, and this operation flow is terminated. On the other hand, in a case where the object 202 moves in the user region 400 that belongs to the own base (YES in S2101), the flow proceeds to S2102.

In S2102, the control unit 301 determines whether or not a notification indicating that a stop operation for stopping the object 202 in the user region 400 in the own base over a predetermined period of time is input to the input device 152 is received from the display unit 102. In a case where the notification indicating that the stop operation is input is not received (NO in S2102), the flow proceeds to S2103. In S2103, the control unit 301 controls the display unit 102 so that the object 202 moves according to the gradient on the display screen 201 of the display device 151, and this operation flow is terminated. For example, the control unit 301 may execute the processing in S2002 to S2005 in FIG. 20 described above in S2103 and may control the position of the object 202 according to the gradient. Note that, in this case, since the object 202 of which the position is a control target is the shared object 451, it is not necessary for the control unit 301 to apply the sharing right in S2003.

On the other hand, in a case where the notification indicating that the stop operation is input is received in S2102 (YES in S2102), the flow proceeds to S2104. In S2104, the control unit 301 updates an entry of the object information 1300 corresponding to the object 202 and cancels the sharing right. Then, the control unit 301 controls the display unit 102 so that the object 202 is disposed and displayed in the user region 400 on which the stop operation is performed on the display screen 201, and this operation flow is terminated. For example, the control unit 301 specifies a user ID and a base corresponding to the user region 400 in which the object 202 is disposed from the user region information 1200. Then, the control unit 301 updates a user ID and a base of the entry of the object 202 in the object information 1300 to the information regarding the specified user ID and base. Furthermore, the control unit 301 may update to cancel the sharing right of the entry of the object 202 in the object information 1300 and may also update the position of the entry of the object 202 to the position where the object 202 is disposed in the user region 400.

As described above, according to the processing in FIG. 21, the control unit 301 can cancel the sharing right of the shared object 451 and dispose the object 202 in the user region 400. An operation on the object 202 in the user region 400 from other base is prohibited by the operation flow in FIG. 18. Therefore, in a case where the display screen 201 is shared by the plurality of bases, it can be prevented that the object 202 in use in the user region 400 is operated by a user in the other base.

Although the embodiment has been described above, the embodiment is not limited to this. For example, the operation flow described above is only exemplary, and the embodiment is not limited to this. If possible, the operation flow may be executed by changing the order of processing, may include another processing, or a part of processing may be omitted. For example, the processing in S1602 and S1603 in FIG. 16 and the processing in S1601 may be executed in a transposed order.

Furthermore, in the embodiment, an example is described in which the server 101 controls the display on the display device 151 via the display unit 102. However, the embodiment is not limited to this. For example, in another embodiment, the server 101 may be connected to the display device 151, the input device 152, and the sensor 153 without via the display unit 102 and may control the display on the display screen 201 according to the embodiment.

In the above embodiment, for example, the control unit 301 may behave as, for example, the display control unit 311 in the operation flow in FIG. 16, the processing in S1701 in FIG. 17, the operation flow in FIGS. 19 to 21. Furthermore, the control unit 301 may behave, for example, as a setting unit in the operation flow in FIG. 15. Furthermore, the control unit 301 may behave as the operation control unit 313 in the operation flow in FIG. 18.

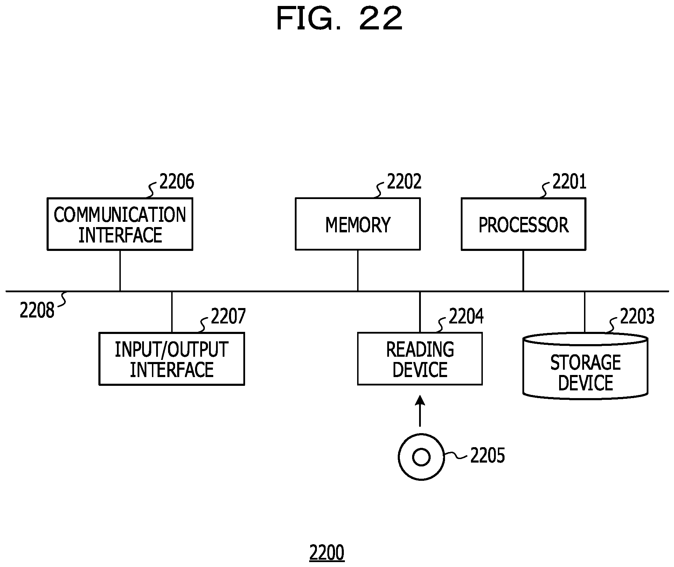

FIG. 22 is a diagram illustrating a hardware configuration of a computer (information processing apparatus) 2200 for realizing the server 101 according to the embodiment. The hardware configuration for realizing the server 101 in FIG. 22 includes, for example, a processor 2201, a memory 2202, a storage device 2203, a reading device 2204, a communication interface 2206, and an input/output interface 2207. Note that the processor 2201, the memory 2202, the storage device 2203, the reading device 2204, the communication interface 2206, and the input/output interface 2207 are connected to each other, for example, via a bus 2208.

The processor 2201 may be, for example, a single processor, a multiprocessor, or a multicore. The processor 2201 provides a part or all of the functions of the control unit 301 described above, for example, by executing a program describing the procedure of the operation flow by using the memory 2202. For example, the processor 2201 of the server 101 may behave as the display control unit 311, the setting unit 312, and the operation control unit 313, for example, by reading and executing a program stored in the storage device 2203.

The memory 2202 is, for example, a semiconductor memory and may include a RAM region and a ROM region. The storage device 2203 is, for example, a hard disk, a semiconductor memory such as a flash memory, or an external storage device. Note that RAM is an abbreviation for Random Access Memory. Furthermore, ROM is an abbreviation for Read Only Memory.

The reading device 2204 accesses a removable storage medium 2205 according to an instruction of the processor 2201. The removable storage medium 2205 is realized by, for example, a semiconductor device (USB memory and the like), a medium to/from which information is input/output by a magnetic action (magnetic disk and the like), a medium to/from which information is input/output by an optical action (CD-ROM, DVD, and the like), and the like. Note that USB is an abbreviation for Universal Serial Bus. CD is an abbreviation for Compact Disc. DVD is an abbreviation for Digital Versatile Disk.

The storage unit 302 includes, for example, the memory 2202, the storage device 2203, and the removable storage medium 2205. For example, the storage device 2203 of the server 101 stores the user region information 1200 and the object information 1300.

The communication interface 2206 exchanges data with the network 105 and other devices according to the instruction of the processor 2201. For example, the processor 2201 may control the communication interface 2206 and may be connected to the other server 101 via the network 105 or the display unit 102. The input/output interface 2207 may be, for example, an interface between an input device and an output device. The input device is, for example, a device such as a keyboard or a mouse that receives an instruction from a user. The output device is, for example, a display device such as a display and an audio device such as a speaker.

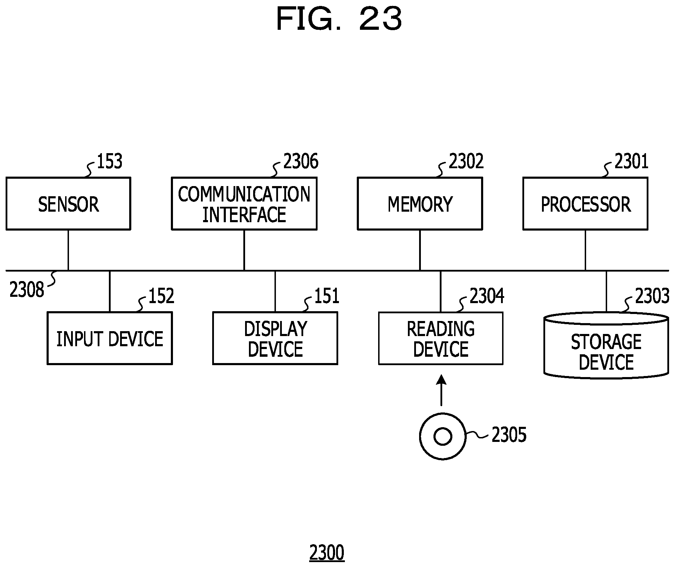

FIG. 23 is a diagram illustrating a hardware configuration of a computer 2300 for realizing the display unit 102 according to the embodiment. The hardware configuration for realizing the display unit 102 in FIG. 23 includes, for example, a processor 2301, a memory 2302, a storage device 2303, a reading device 2304, a communication interface 2306, a display device 151, an input device 152, and a sensor 153. Note that the processor 2301, the memory 2302, the storage device 2303, the reading device 2304, the communication interface 2306, the display device 151, the input device 152, and the sensor 153 are connected to each other, for example, via a bus 2308.

The processor 2301 may be, for example, a single processor, a multiprocessor, or a multicore. The processor 2301 may control display on the display device 151 according to the instruction of the server 101 and notify the server 101 of inputs from the input device 152 and the sensor 153 by executing a program by using the memory 2302.

The memory 2302 is, for example, a semiconductor memory and may include a RAM region and a ROM region. The storage device 2303 is, for example, a hard disk, a semiconductor memory such as a flash memory, or an external storage device.

The reading device 2304 accesses a removable storage medium 2305 according to the instruction of the processor 2301. The removable storage medium 2305 is realized by, for example, a semiconductor device (USB memory and the like), a medium to/from which information is input/output by a magnetic action (magnetic disk and the like), a medium to/from which information is input/output by an optical action (CD-ROM, DVD, and the like), and the like.

The communication interface 2306 exchanges data with the server 101 and other devices according to the instruction of the processor 2301. For example, the processor 2301 may control the communication interface 2306, receive data to be displayed on the display device 151 from the server 101, and display the received data on the display device 151. Furthermore, the processor 2301 may control the communication interface 2306 and notify the server 101 of information input by the input device 152 and the sensor 153. As described above, the display device 151 is, for example, a device that displays information such as a display or a projector. For example, the input device 152 may be a touch sensor that is integrally provided with the display device 151 such as a display or may be an imaging device such as a camera that receives input of a light spot track drawn by an infrared pen and the like. The sensor 153 may be, for example, an imaging device such as a camera that puts the display screen and surroundings of the display screen within an angle of view or may be a depth sensor and the like. In an example, the imaging device used as the input device 152 may be used as the sensor 153. In this case, it is possible that the sensor 153 is not included.

Furthermore, the program according to the embodiment described above is provided, for example, to the server 101 and the display unit 102 in the following form.

    (1) stored in the storage devices 2203 and 2303 in advance
    (2) provided by the removable storage media 2205 and 2305
    (3) provided from a server such as a program server via the communication interfaces 2206 and 2306

Note that the hardware configurations for realizing the server 101 and the display unit 102 described with reference to FIGS. 22 and 23 are only exemplary, and the embodiment is not limited to this. For example, a part or all

**EP 3 660 687 A1**

of the functions of each unit described above may be implemented as hardware including a FPGA and a SoC. Note that FPGA is an abbreviation for Field Programmable Gate Array SoC is an abbreviation for System-on-a-chip

Several embodiments have been described above. However, an embodiment is not limited to the embodiments described above, and it should be understood that the embodiment include various modifications and alternatives of the embodiments described above. For example, it would be understood that various embodiments can be embodied by modifying components without departing from the spirit and scope of the embodiment. Furthermore, it would be understood that various embodiments may be implemented by appropriately combining a plurality of components disclosed in the embodiments described above. Moreover, a person skilled in the art would understand that various embodiments can be implemented by deleting or replacing some components from all the components indicated in the embodiments or by adding some components to the components indicated in the embodiments.

REFERENCE SIGNS LIST

| | |
|---|---|
| 100: | information display system |
| 101: | server |
| 102: | display unit |
| 105: | network |
| 151: | display device |
| 152: | input device |
| 153: | sensor |
| 301: | control unit |
| 302: | storage unit |
| 311: | display control unit |
| 312: | setting unit |
| 313: | operation control unit |
| 2201: | processor |
| 2202: | memory |
| 2203: | storage device |
| 2204: | reading device |
| 2205: | removable storage medium |
| 2206: | communication interface |
| 2207: | input/output interface |
| 2208: | bus |
| 2300: | computer |
| 2301: | processor |
| 2302: | memory |
| 2303: | storage device |
| 2304: | reading device |
| 2305: | removable storage medium |
| 2306: | communication interface |
| 2308: | bus |

**Claims**

1. An information processing apparatus comprising:

   a display control unit that controls display of an object, by a second display device, on a second display screen that shares the object with a first display screen displayed by a first display device;
   a setting unit that sets a first operation region allocated to the first display screen and a second operation region allocated to the second display screen in the second display screen; and
   an operation control unit that prohibits an input of an operation to an object included in the first operation region and permit an input of an operation to an object included in the second operation region, on the second display screen.

2. The information processing apparatus according to claim 1, wherein

15

the display control unit controls display by the second display device so as to display, on the second display screen, the object included in the second operation region in front of the object included in the first operation region.

3. The information processing apparatus according to claim 1 or 2, wherein
   the display control unit further performs control so that an object does not stay in the first operation region and the second operation region in a case where the object that is not included in the first operation region and the second operation region moves in the first operation region or the second operation region on the second display screen.

4. A share control method performed by an information processing apparatus, the method comprising:

   controlling display of an object, by a second display device, on a second display screen that shares the object with a first display screen displayed by a first display device;
   setting a first operation region allocated to the first display screen and a second operation region allocated to the second display screen in the second display screen; and
   prohibiting an input of an operation to an object included in the first operation region and permitting an input of an operation to an object included in the second operation region, on the second display screen.

5. A share control program for causing an information processing apparatus to execute processing for:

   controlling display of an object, by a second display device, on a second display screen that shares the object with a first display screen displayed by a first display device;
   setting a first operation region allocated to the first display screen and a second operation region allocated to the second display screen in the second display screen; and
   prohibiting an input of an operation to an object included in the first operation region and permitting an input of an operation to an object included in the second operation region, on the second display screen.

# FIG. 1

BASE 1

102
DU1-1

151 — DISPLAY DEVICE

152 — INPUT DEVICE

153 — SENSOR

DU1-n    102

101
SERVER A

105

100

101
SERVER B

BASE 2

102
DU2-1

DISPLAY DEVICE — 151

INPUT DEVICE — 152

SENSOR — 153

102
DU2-n

# FIG. 2

BASE 1

202

201

203

USER 1

USER 2

USER 3

BASE 2

202

201

203

USER 4

# FIG. 3

SERVER

CONTROL UNIT 301

STORAGE UNIT 302

DISPLAY CONTROL UNIT 311

SETTING UNIT 312

COMMUNICATION UNIT

OPERATION CONTROL UNIT 313

303

101

# FIG. 4

# FIG. 5

HIERARCHY IN BASE 1 :

UPPER LAYER: BASE 1

LOWER LAYER: BASE 2

# FIG. 6

HIERARCHY IN BASE 2 :

UPPER LAYER: BASE 2

451
411
400
201
USER 2

LOWER LAYER: BASE 1

400
412
451
201
USER 1

# FIG. 7

BASE 1

400  412  411  451  201

A
B

USER 1

BASE 2

400  411  412  451  201

A
B

USER 2

# FIG. 8

# FIG. 9

FIG. 10A

BEFORE
MOVEMENT

411

400

451

201

400

412

USER 1

FIG. 10B

AFTER
MOVEMENT

412

451

451

400

400

201

MOVE

USER 1

# FIG. 11

DISPLAY SCREEN

$\Omega_3$ :BASE B USER REGION

$\Omega_1$ :OWN BASE USER REGION          $\Omega_2$ :BASE A USER REGION

# FIG. 12

| USER ID | BASE | POSITION | SIZE |
|---------|------|----------|------|
| 1 | 1 | (x1, y1) | (w1, h1) |
| 2 | 1 | (x2, y2) | (w2, h2) |
| 3 | 2 | (x3, y3) | (w3, h3) |
| ... | ... | ... | ... |

1200

FIG. 13

| OBJECT | USER ID | BASE | SHARING RIGHT | POSITION | SIZE |
|--------|---------|------|---------------|----------|------|
| A | 1 | 1 | NO | (x1, y1) | (w1, h1) |
| B | 2 | 2 | NO | (x2, y2) | (w2, h2) |
| C | ALL | ALL | YES | (x3, y3) | (w3, h3) |
| ... | ... | ... | ... | ... | ... |

1300

# FIG. 14

# FIG. 15

```
┌─────────────────────────────┐
│ ALLOCATION OF USER REGION   │
└─────────────────────────────┘
```

```
        (  START  )
             │
             ▼
┌────────────────────────────────┐
│  RECOGNIZE POSITION OF USER     │──── S1501
└────────────────────────────────┘
             │
             ▼
┌────────────────────────────────┐
│  DETERMINE USER REGION SIZE     │──── S1502
└────────────────────────────────┘
             │
             ▼
┌────────────────────────────────┐
│ ALLOCATE USER REGION NEAR USER  │──── S1503
│            POSITION             │
└────────────────────────────────┘
             │
             ▼
┌────────────────────────────────┐
│        REGISTER ENTRY           │──── S1504
└────────────────────────────────┘
             │
             ▼
         (   END   )
```

# FIG. 16

ALLOCATION OF HIERARCHY

START

CREATE OWN BASE LAYER — S1601

CONNECT TO SERVER IN OTHER BASE — S1602

CREATE OTHER BASE LAYER — S1603

DISPOSE OWN BASE LAYER ON UPPER SIDE — S1604

END

# FIG. 17

SPECIFICATION OF OBJECT

START

CREATE AND DISPLAY OBJECT ⟋S1701

ACQUIRE POSITION AND SIZE OF OBJECT ⟋S1702

⟋S1703
DOES OBJECT EXIST IN USER REGION? — NO → S1705

DETERMINE OBJECT AS SHARED OBJECT

YES

APPLY USER ID TO OBJECT ⟋S1704

REGISTER ENTRY ⟋S1706

END

# FIG. 18

```
┌─────────────────────────┐
│  OBJECT OPERATION        │
│  PERMISSION              │
└─────────────────────────┘
```

( START )

DETECT OPERATION (POSITION) ON OBJECT ——— S1801

OBJECT IN OWN BASE? ——— S1802

NO

YES

IS SHARING RIGHT APPLIED TO OBJECT? ——— S1804

NO

YES

PERMIT OPERATION ON OBJECT ——— S1803

PROHIBIT OPERATION ON OBJECT ——— S1805

( END )

# FIG. 19

GRADIENT MAP GENERATION

START

ACQUIRE USER REGION INFORMATION — S1901

GENERATE ENERGY FUNCTION — S1902

CALCULATE GRADIENT STRENGTH AND GRADIENT DIRECTION — S1903

SAVE GRADIENT MAP INFORMATION — S1904

# FIG. 20

OBJECT SHARING

```
                    START

                      │
                      ▼
                              ╱S2001
         NO         ◇
    ┌──────────────── MOVE TO OUTSIDE OF
    │                 USER REGION?
    │                     ◇
    │                      │
    │                     YES
    │                      │
    │                      ▼                              ◀──────────┐
    │                              ╱S2002                            │
    │                 ◇                                              │
    │            DOES GRADIENT          NO                           │
    │            STRENGTH SATISFY END ───────────┐                   │
    │            CONDITION?                       │                  │
    │                 ◇                           ▼                  │
    │                  │                                ╱S2004       │
    │                 YES                UPDATE POSITIONAL           │
    │                  │                 INFORMATION BY             │
    │                  │          ╱S2003 COORDINATES OF OBJECT AND   │
    │                  ▼                 GRADIENT MAP INFORMATION    │
    │           APPLY SHARING RIGHT                │                 │
    │                  │                           ▼                 │
    │                  │                                ╱S2005       │
    │                  │                 MOVE OBJECT BY GRADIENT ─────┘
    │                  │
    └──────────────────┤
                       ▼
                     END
```

# FIG. 21

CANCELLATION OF SHARING

START

S2101

MOVE IN USER REGION IN OWN BASE?

NO

YES

S2102

STOP IN USER REGION OVER A PREDETERMINED PERIOD OF TIME

NO

YES

S2104

DISPOSE IN USER REGION AND CANCEL SHARING

S2103

MOVE OBJECT BY GRADIENT

END

# FIG. 22

COMMUNICATION INTERFACE 2206

MEMORY 2202

PROCESSOR 2201

2208

INPUT/OUTPUT INTERFACE 2207

READING DEVICE 2204

STORAGE DEVICE 2203

2205

2200

# FIG. 23

2300

## INTERNATIONAL SEARCH REPORT

| International application No. |
|---|
| PCT/JP2017/026712 |

| A. CLASSIFICATION OF SUBJECT MATTER |
|---|
| *G06F13/00(2006.01)i* |

According to International Patent Classification (IPC) or to both national classification and IPC

| B. FIELDS SEARCHED |
|---|

Minimum documentation searched (classification system followed by classification symbols)
G06F13/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2013-020520 A  (Sony Corp.),<br>31 January 2013 (31.01.2013),<br>paragraphs [0022], [0035] to [0037], [0073] to [0088]<br>& US 2013/0019188 A1<br>paragraphs [0049], [0069] to [0072], [0122] to [0141]<br>& CN 102880823 A | 1-2,4-5<br>3 |
| A | JP 2016-170675 A  (NEC Corp.),<br>23 September 2016 (23.09.2016),<br>paragraphs [0051] to [0062]<br>& US 2016/0267287 A1<br>paragraphs [0088] to [0099] | 3 |

| [×]  Further documents are listed in the continuation of Box C. | [ ]  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 August 2017 (15.08.17) | 22 August 2017 (22.08.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2017/026712 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 6101393 B1 (Isao FUJINO), 22 March 2017 (22.03.2017), paragraph [0016] (Family: none) | 3 |

Form PCT/ISA/210 (continuation of second sheet) (January 2015)

**EP 3 660 687 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5046559 A
- JP 2004113386 A
- JP 2006202138 A
- JP 2014203281 A